# FASCICULE DE BREVET EUROPEEN

(11) **EP 3 728 052 B1**
(45) Date de publication et mention de la délivrance du brevet: **01.09.2021**
(21) Numéro de dépôt: 18829426.8
(22) Date de dépôt: 28.11.2018
(51) Int. Cl.: B65B 61/24

(54) **PROCÉDÉ D'INVERSION D'UN FOND DE RÉCIPIENT EN MATIÈRE PLASTIQUE, DISPOSITIF POUR SA MISE EN OEUVRE ET UTILISATION DU DISPOSITIF POUR LA MISE EN OEUVRE DU PROCÉDÉ**
VERFAHREN ZUR UMKEHRUNG DER BODENWAND EINES KUNSTSTOFFBEHÄLTERS, VORRICHTUNG ZUR DURCHFÜHRUNG DES VERFAHREN UND VERWENDUNG DER VORRICHTUNG ZUR DURCHFÜHRUNG DES VERFAHRENS
METHOD FOR INVERTING THE BASE OF A PLASTIC CONTAINER, DEVICE FOR IMPLEMENTING THE SAME AND USE OF THE DEVICE FOR IMPLEMENTING THE METHOD

(30) Priorité: 21.12.2017 FR 1762739
(43) Date de publication de la demande: 28.10.2020
(73) Titulaire: Sidel Participations, 76930 Octeville-sur-Mer (FR)
(72) Inventeur: GODET, Florian, 76930 Octeville-sur-Mer (FR); NEVEU, Jérôme, 76930 Octeville-sur-Mer (FR)
(74) Mandataire: Sidel Group
(86) Numéro de dépôt international: PCT/FR2018/053028
(87) Numéro de publication internationale: WO 2019/122563

(56) Documents cités:
- EP-A1- 3 081 527
- EP-A1- 3 109 177
- WO-A1-2015/039690

## Description

### DOMAINE DE L'INVENTION

L'invention a pour objet la fabrication de récipients, tels que des bouteilles, qui sont obtenus par soufflage ou étirage-soufflage de préformes en matériau thermoplastique (par exemple du P.E.T.). Elle s'applique plus particulièrement mais non exclusivement au traitement de récipients remplis et fermés à chaud avec un contenant, notamment du liquide, le terme "chaud" signifiant que la température du contenant est proche de, ou supérieure à, la température de transition vitreuse du matériau constitutif du récipient. Typiquement, le remplissage à chaud de récipients en P.E.T., dont la température de transition vitreuse est de l'ordre de 80°C, s'effectue avec un liquide dont la température est comprise entre 85° C et 100° C.

### ART ANTERIEUR

A titre de remarque préalable, il est indiqué que dans la suite de la présente description et dans les revendications, par souci de simplification, sauf indication contraire, les termes "haut", "bas", "vertical", "horizontal", "dessus", "dessous", "supérieur", "inférieur" et tout terme comparable seront à interpréter en considérant que le récipient est debout, c'est-à-dire porté sur un plan horizontal par son assise. La direction ou l'axe "longitudinal" du récipient est une direction ou un axe vertical, passant par les centres du fond du récipient et du bouchon.

Il est connu de réaliser un tel récipient remplissable à chaud dans un moule chauffé à une température excédant celle du contenant qui sera placé dans le récipient, et de maintenir, après formage par soufflage ou étirage-soufflage, le récipient dans le moule pendant une durée significative (de l'ordre de quelques dixièmes de seconde), de sorte que le contact entre le récipient et le moule chaud permet une relaxation des contraintes qui surviennent dans le matériau lors du formage. Cette fabrication dans un moule chaud a pour effet d'éviter que la relaxation des contraintes qui fait suite au moulage ne survienne lors du remplissage à chaud : en effet, si le récipient était fabriqué dans un moule froid, il se ramollirait lors du remplissage et se déformerait de façon incontrôlée.

Toutefois, une telle fabrication ne suffit pas à garantir qu'un récipient, une fois achevé et rempli, va conserver sa forme. En effet, après remplissage et fermeture (bouchage) alors que le contenu est encore chaud, il se crée, lors du refroidissement, une contraction de l'air emprisonné (puisqu'il se refroidit) et, dans une moindre mesure, une contraction du liquide, et donc une dépression qui provoque une déformation du récipient par collapsage de sa paroi. Le récipient peut donc s'ovaliser ou se déformer de toute autre manière anarchique, ce qui peut causer des problèmes de manutention ou d'esthétique.

Afin de remédier à ces inconvénients, on a alors conçu des récipients dont la ou les parois latérales sont pourvues de panneaux de compensation (appelés "pressure panels" en anglais) qui ont pour but d'absorber les dépressions et d'éviter une déformation anarchique des récipients, lors de leur refroidissement. Le brevet américain US5341946 décrit un récipient de ce type.

Toutefois, la présence des panneaux de compensation limite la possibilité, pour les créateurs de récipients, d'obtenir des formes distinctes les unes par rapport aux autres, ce qui ne facilite pas nécessairement le marketing. En outre, de tels récipients sont relativement lourds et ils sont donc coûteux en raison de la quantité de matière première qu'ils nécessitent.

Afin de remédier aux inconvénients des récipients à panneaux de compensation, tant en termes de marketing que de coûts, il a été imaginé, relativement récemment, des récipients dont le fond est pourvu d'un diaphragme central, inversable, entouré par une zone constituant l'assise, circulaire, du récipient, et dont le corps est renforcé par des cannelures périphériques. La demande de brevet européen, publiée sous le numéro EP3109177A1 au nom de la demanderesse, présente un récipient de ce type, qui est allégé par rapport aux récipients antérieurs à panneaux de compensation.

Conformément à ce qui est décrit dans cette demande EP3109177A1, à l'issue de la fabrication, le diaphragme se présente sous la forme d'une cuvette dont la concavité est tournée vers l'intérieur du récipient. Le diaphragme est contenu dans un anneau de pose formant une zone d'assise périphérique. La zone d'assise présente une hauteur telle qu'elle contient entièrement le diaphragme de sorte que le récipient peut tenir debout dans cette configuration, sans que le diaphragme ne soit posé sur un plan d'appui, ce qui en facilite le transport et la manipulation (notamment pour le remplissage et l'inversion qui va suivre). Après remplissage et fermeture, le diaphragme est repoussé vers l'intérieur à l'aide d'un dispositif approprié, afin de l'inverser, de sorte qu'à l'issue de cette opération, il se présente sous la forme d'une voute dont la convexité est tournée vers l'intérieur du récipient

Le dispositif est constitué :
- d'une part, d'une plaque inférieure de support, encore dénommée sellette, annulaire fixe par rapport à un châssis du dispositif, laquelle sellette est traversée par un orifice central et comporte un plan de réception entourant ledit orifice pour recevoir l'assise du récipient ;
- d'autre part, d'un pousseur, qui est actionnable par des moyens d'entraînement, est disposé sous le fond du récipient et est mobile, selon une direction verticale au travers de l'orifice ménagé dans la sellette, et présente une forme extérieure qui peut correspondre sensiblement à la forme du diaphragme après inversion ;
- enfin, d'un organe d'appui supérieur sous la forme d'une cloche venant se positionner sur le bouchon du récipient, lequel organe est fixé à l'extrémité d'un bloc de liaison supérieur pouvant être déplacé verticalement par rapport à la sellette entre une position haute permettant la mise en place du récipient dans le dispositif et une position basse dans laquelle elle est maintenue pendant l'inversion.

Avant inversion, l'assise du récipient est posée sur la plaque annulaire et le pousseur est dans une position escamotée, de sorte qu'aucune partie du pousseur n'est au-dessus du plan n'est en contact avec le diaphragme. Le bloc de liaison est mis en position basse, de sorte que l'organe d'appui est positionné au-dessus du bouchon, en contact fixe avec celui-ci. Lorsque le pousseur est actionné, il remonte au travers de l'orifice de la plaque jusqu'à une position finale d'inversion. L'organe d'appui retenant le récipient, le diaphragme s'inverse sous la poussée du pousseur et il vient prendre sa forme de voute.

L'inversion, puisqu'elle a lieu après fermeture, entraîne une réduction du volume interne du récipient, ce qui provoque une surpression immédiate à l'intérieur du récipient avec, pour conséquence, une rigidification des parois. Lorsque le liquide se refroidit, le volume d'air restant dans le récipient se contracte et le liquide se rétracte, de sorte que la rigidité du récipient décroit, mais pas suffisamment pour que l'utilisateur ait l'impression d'être en présence d'un récipient "mou" au moment de l'achat et ce jusqu'à une première ouverture.

L'emploi d'un tel récipient à diaphragme n'est pas limité au remplissage avec des liquides chauds. En effet, dans la mesure où ces récipients sont plus légers que ceux à panneaux, ils sont naturellement plus souples que ces derniers. Toutefois, puisque l'inversion après fermeture entraîne une réduction du volume interne du récipient et une surpression à l'intérieur du récipient avec une rigidification des parois, il est tout à fait envisageable d'utiliser ce type de récipient avec des liquides introduits à température ambiante. Au moment de l'achat, l'utilisateur ne sera pas déconcerté par le contact avec le récipient, car ce dernier lui semblera rigide.

Toutefois, le dispositif utilisé pour l'inversion et sa mise en œuvre ne donnent pas pleine satisfaction.

En effet, lors de l'inversion et jusqu'à sa fin, le récipient est soumis, selon son axe vertical, à des forces antagonistes qui apparaissent entre l'ensemble constitué par la sellette et le pousseur, d'une part, et l'organe d'appui, d'autre part. Cependant, dès lors que le pousseur est revenu dans sa position rétractée, il peut arriver que la pression dans le récipient soit trop importante et que le diaphragme s'affaisse, puisqu'aucune autre portion du récipient ne permet de compenser la surpression. L'inversion n'est donc pas nécessairement irréversible.

Aussi, afin de résoudre ce problème d'affaissement, il a été envisagé de libérer les contraintes exercées sur le récipient en reliant l'organe d'appui à des moyens pilotés pour l'écarter de la sellette (tels qu'un mécanisme à came et galet d'entraînement de l'organe d'appui lorsque le dispositif est porté par un châssis formé par un carrousel rotatif), en faisant remonter légèrement l'organe d'appui de façon à l'écarter du dessus du récipient, avant de redescendre le pousseur. Une telle action d'écartement permet que la pression interne tende à faire s'allonger le récipient : en fait, sous l'effet de la pression interne, certaines des cannelures périphériques du corps du récipient se déforment à la manière d'un soufflet, et le récipient s'allonge donc, ce qui provoque une augmentation de son volume interne et une baisse de la pression jusqu'à ce que les forces dues à la pression interne s'équilibrent avec les forces résistantes du corps du récipient. Dans un tel cas, le diaphragme ne s'affaisse pas, car sa forme voutée lui confère une résistance supérieure à celle des cannelures.

Toutefois, un dispositif ainsi structuré présente des inconvénients.

Ainsi, lorsque l'organe d'appui est écarté, le récipient se retrouve simplement posé sur la sellette et sur le pousseur tant que celui-ci n'a pas débuté son mouvement de redescente vers sa position rétractée ; il est uniquement posé sur la sellette après que le pousseur a débuté son mouvement de redescente vers sa position rétractée. Le récipient n'est donc plus maintenu de façon stable ce qui empêche de procéder à toute autre opération de traitement sur le récipient tant qu'il est posé sur la sellette. Ainsi, par exemple, dans cette configuration, il est impossible de poser une étiquette sur le récipient (ce qui nécessite d'exercer une pression latérale sur celui-ci) ou bien de vérifier que l'inversion a été correctement réalisée.

### RESUME DE L'INVENTION

Un premier objet de l'invention est de proposer un procédé fiable et simple, qui permette une inversion irréversible du diaphragme d'un récipient.

Selon l'invention, un procédé d'inversion du diaphragme d'un récipient rempli et bouché comportant un corps prolongé, au-dessus, par une épaule surmontée par un col, et comportant, dans le prolongement du corps, vers le bas, un fond comprenant le diaphragme contenu dans un anneau se terminant par une assise périphérique formant un plan de pose, procédé selon lequel le récipient est préalablement posé sur une sellette, un organe d'appui est appliqué sur le récipient et un pousseur est remonté au travers de la sellette pour inverser le diaphragme et le conformer en voute, caractérisé en ce que pendant que le pousseur inverse le diaphragme, l'assise est éloignée du plan supérieur de la sellette, de façon à ce que, lorsque le pousseur atteint sa position haute, une zone soit libérée entre l'assise et la sellette pour permettre une expansion longitudinale du récipient sous l'effet combiné de l'augmentation de la pression interne provoquée par la diminution du volume due à l'inversion et des forces engendrées à l'intérieur du récipient par le pousseur et l'organe d'appui.

Selon d'autres caractéristiques, le procédé d'inversion comporte, après réalisation de l'inversion du diaphragme alors que le récipient est positionné avec son assise sur la sellette et que l'organe d'appui est maintenu en appui sur le récipient, une séquence de contrôle de l'inversion d'un diaphragme, qui comporte les étapes suivantes :
le déplacement du pousseur de sa position escamotée vers sa position finale, d'inversion du diaphragme, en lui appliquant une force prédéterminée d'entrainement, inférieure à une force qui permettrait de repousser vers le haut un diaphragme qui aurait été mal inversé, de sorte que le pousseur pénètre dans la voute constituée par le diaphragme et que, lorsque le pousseur parvient au contact de la voute, le récipient reste plaqué sur la sellette et le mouvement du pousseur est stoppé du fait du différentiel des forces ;
la détermination de la position du pousseur au moment où il est stoppé et, en conséquence, la détermination de l'amplitude du déplacement qu'il a effectué ;
la comparaison de l'amplitude du déplacement avec une valeur théorique qui, si elle est atteinte, correspond à un diaphragme correctement inversé et donc une voute correctement formée et qui, si elle n'est pas atteinte, correspond à une voute incorrectement formée, voire pas formée du tout.

Un autre objet de l'invention est de proposer un dispositif pour la mise en œuvre du procédé.

Le dispositif étant porté par un châssis, il comporte :
- une sellette inférieure de support, fixe par rapport audit châssis, laquelle sellette est traversée par un orifice central et comporte un plan de réception entourant ledit orifice pour recevoir l'assise d'un récipient ;
- un pousseur, déplaçable au travers de l'orifice central de la sellette selon une direction verticale par des moyens d'entraînement solidaires du châssis, le pousseur pouvant être déplacé d'une position escamotée à une position finale d'inversion, dans laquelle il se trouve au-dessus du plan de la sellette ;
- un organe d'appui supérieur, destiné à venir en appui sur le récipient bouché lorsque celui-ci est en place et contrer la force du pousseur lorsque ce dernier est déplacé vers la position d'inversion, lequel organe est fixé à une extrémité, située en regard de la sellette et du pousseur, d'un bloc de liaison relié au châssis par une liaison en translation permettant au bloc d'être déplacé verticalement par rapport à la sellette entre une position haute, permettant la mise en place du récipient dans le dispositif, et une position basse, dans laquelle le bloc est maintenu pendant l'inversion ;
et il est caractérisé en ce que l'organe d'appui est fixé à ladite extrémité du bloc par l'intermédiaire de moyens de liaison élastique en compression, qui sont agencés pour que ledit organe soit lui-même mobile en translation par rapport au bloc dans une direction perpendiculaire au plan de la sellette et pour que, en l'absence de récipient entre la sellette et l'organe d'appui, ce dernier soit dans une première position extrême, basse relativement au bloc, et pour que, lorsqu'une pression supérieure à la force minimale de rappel des moyens de liaison élastique en compression est exercée vers le haut contre cet organe, il remonte vers une seconde position extrême, haute, en s'éloignant de la sellette,
en ce que la distance entre l'organe d'appui et la sellette, est telle que, lorsqu'un récipient dont le diaphragme doit être inversé est en place sur la sellette et que le bloc parvient en position basse, l'organe d'appui parvient au contact du récipient.

Un dispositif conforme à l'invention permet de réaliser l'inversion d'un diaphragme sans qu'il ne cherche à retourner vers sa position initiale lorsque le pousseur est ramené vers sa position escamotée et il assure un maintien du récipient après inversion et retour du pousseur vers sa position escamotée, qui autorise d'autres traitements, tels qu'un étiquetage. En effet, l'allongement du récipient pendant l'inversion permet une augmentation de volume compensant quelque peu le volume perdu par l'inversion du diaphragme et donc une réduction sensible de la pression interne.

Selon d'autres caractéristiques, prises seules ou en combinaison :
- la force d'entraînement du pousseur est sélectionnable entre une valeur prédéterminée, supérieure à la force maximale de rappel des moyens de liaison élastique en compression, et une valeur inférieure à la force minimale de rappel desdits moyens.
   - l'organe d'appui supérieur est agencé pour venir en appui sur les moyens de bouchage du récipient ;
   - l'organe d'appui supérieur est sous la forme d'une cloche dont les dimensions sont telles qu'elle peut contenir les moyens de bouchage du récipient et dont le rebord périphérique est agencé pour venir en appui sur une zone supérieure du récipient, telle son épaule ;
   - les moyens de liaison élastique en compression par l'intermédiaire desquels l'organe d'appui est fixé à ladite extrémité du bloc comportent un ressort en compression ; le ressort est métallique ; le ressort est en élastomère ;
   - l'organe d'appui supérieur présente une course de déplacement, relativement à l'extrémité du bloc à laquelle il est fixée, entre ses positions haute et basse inférieure ou égale à 10 mm; de préférence, la course de déplacement est inférieure à 5 mm ;
   - le pousseur présente une forme extérieure correspondant sensiblement à la forme du diaphragme après inversion.

L'invention concerne également une utilisation du dispositif pour procéder à l'inversion d'un diaphragme, caractérisée en ce qu'elle comporte successivement les étapes suivantes :
un positionnement du récipient avec son assise sur la sellette alors que le pousseur est en position escamotée et le bloc est en position haute ;
une amenée du bloc à sa position basse, de sorte que l'organe d'appui parvient en appui sur le récipient ;
le déplacement du pousseur de sa position escamotée vers sa position finale, d'inversion du diaphragme, en lui appliquant une force prédéterminée d'entrainement, supérieure à la force maximale de rappel des moyens de liaison élastique en compression, de sorte que pendant le déplacement du pousseur, la force appliquée sous le récipient provoque :
   - sa remontée, de sorte que l'assise s'éloigne de la sellette, et la compression concomitante des moyens élastiques de sorte que l'organe d'appui est déplacé vers sa position haute sous l'effet de la poussée exercée par la remontée du récipient,
   - l'entrainement du diaphragme vers sa position inversée, ce qui provoque une réduction du volume interne du récipient et une augmentation de sa pression interne avec, pour conséquence, une expansion longitudinale du récipient sous l'effet de la pression interne, et un rapprochement concomitant de l'assise et de la sellette.

Selon une autre caractéristique, le pousseur est retourné vers sa position escamotée et, en conséquence, la redescente du récipient sur la sellette avec un maintien de l'appui sur le récipient sous l'action des moyens de liaison élastique en compression.

Ainsi, lorsque l'assise s'éloigne de la sellette, des contraintes sont libérées sur les parois du récipient, ce qui permet à l'assise de redescendre légèrement vers la sellette par allongement/déformation du récipient sous l'effet des pressions internes, alors que le pousseur continue son déplacement vers la position d'inversion.

Comparativement aux procédés de l'art antérieur, la pression interne résiduelle après inversion est moindre, ce qui évite que, lors du retour du pousseur vers sa position escamotée, le diaphragme ne tende à s'affaisser. Par ailleurs, puisque les moyens de compression demeurent actifs, le récipient est maintenu et il est possible d'exécuter d'autres opérations de traitement (étiquetage notamment).

Selon d'autres caractéristiques, la force minimale de rappel des moyens de compression est de l'ordre de 250 N ; la force appliquée au pousseur par ses moyens d'entrainement lors de l'inversion est comprise entre 400 N et 1000 N ; la force appliquée au pousseur pour le contrôle est de l'ordre de 150 N.

### INTRODUCTION DES FIGURES

D'autres caractéristiques et avantages de l'invention apparaitront à la lecture de la description qui va suivre faite en lien avec les dessins annexés, sur lesquels :
La FIG.1 est une vue schématique illustrant le dispositif et ses divers composants, alors qu'un récipient est positionné sur la sellette, avant initiation de l'étape d'inversion. Cette vue comporte un médaillon avec un détail élargi de l'organe d'appui.
La FIG.2 est une vue schématique illustrant le dispositif avec le pousseur qui commence à remonter, au début de la séquence d'inversion, avant que le diaphragme ne soit repoussé.
La FIG.3 est une vue schématique illustrant le dispositif alors que le pousseur est en position intermédiaire et que l'inversion du diaphragme est en cours.
La FIG.4 est une vue schématique illustrant le dispositif en fin d'inversion du diaphragme.
La FIG.5 est une vue schématique illustrant le dispositif après inversion, et après que le pousseur soit revenu en position basse.
Les FIG.6 à 8 illustrent la manière dont le dispositif est mis à profit pour contrôler la qualité de l'inversion (sur la FIG.6, l'inversion est correcte ; sur la FIG.7, elle est partielle et, sur la FIG.8, qui illustre un cas extrême, elle n'a pas eu lieu).

### DESCRIPTION DETAILLEE

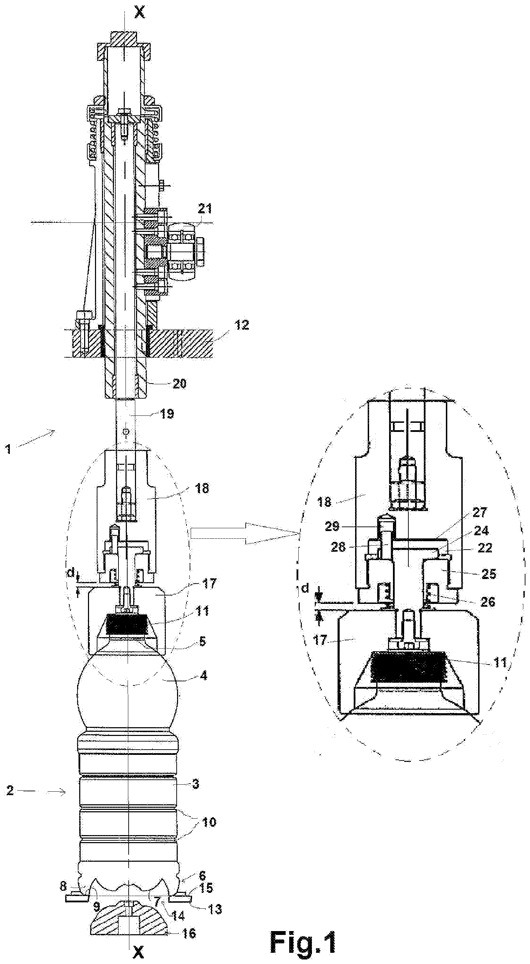

Les FIG.1 à 7 montrent un dispositif 1 pour réaliser l'inversion de diaphragmes de récipients 2, tels que des bouteilles.

De tels récipients 2, tels que celui illustré comportent un corps 3, ici cylindrique, prolongé, au-dessus, par une épaule 4 elle-même surmontée par un col 5. Dans le prolongement du corps 3, vers le bas, le récipient 2 est pourvu d'un fond 6 comprenant un diaphragme 7, ici de section circulaire, mais pouvant avoir d'autres formes permettant son retournement, contenu dans un anneau 8 se terminant par une assise 9 périphérique formant un plan de pose.

Sur la FIG.1, le récipient 2 est dans sa configuration après fabrication par soufflage ou étirage-soufflage, et le diaphragme 7 se présente sous la forme générale d'une cuvette dont la concavité est tournée vers l'intérieur du récipient 2.

Dans l'exemple, le récipient 2 est cylindrique de révolution et son corps 3 est renforcé par des cannelures 10 horizontales. Au lieu d'être cylindrique, il pourrait avoir une forme telle qu'une forme s'inscrivant plus ou moins dans un carré (récipient ou bouteille dite "carronde") ou toute autre section. Toutefois, afin de permettre son inversion, le diaphragme conserverait une section plutôt circulaire. Le contour extérieur de l'anneau 8 serait dessiné pour prolonger la forme du corps et venir mourir sur l'assise 9.

L'épaule 4 du récipient, quant à elle, est en forme de bulle. Elle aussi pourrait adopter toute forme connue (tronconique, en forme de flute, etc...).

Le dispositif 1 est conçu pour inverser des diaphragmes 7 de récipients remplis et bouchés. Aussi, le récipient 2 est-il présenté avec des moyens 11 de bouchage, tel qu'un bouchon vissé sur le col 5.

Comme illustré sur les figures, le dispositif 1 est porté par un châssis 12 (partiellement représenté) et comporte une sellette 13 inférieure de support, fixe par rapport audit châssis 12 (la liaison entre la sellette 13 et le châssis 12 n'est pas représentée mais est à la portée de l'homme de métier), laquelle sellette 13 est traversée par un orifice 14 central et délimite un plan 15 supérieur, de réception, entourant ledit orifice 14 pour recevoir l'assise 9 d'un récipient.

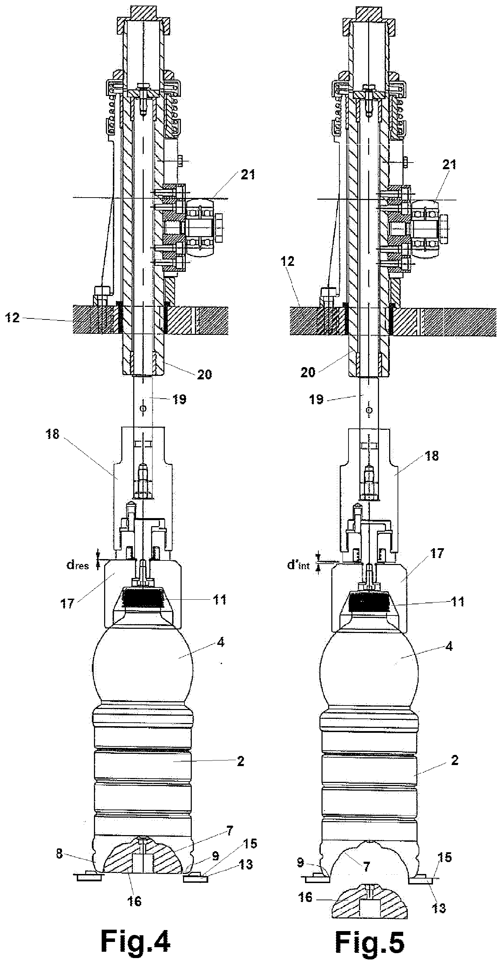

Un pousseur 16 est prévu, qui est déplaçable au travers de l'orifice 14 central de la sellette 13 selon une direction verticale par des moyens d'entraînement (non représentés) solidaires du châssis 12 et du pousseur 16, mais comportent par exemple un moteur électrique d'entrainement. Les moyens d'entraînement permettent que le pousseur 16 puisse être déplacé d'une position escamotée (celle de la FIG.1) dans laquelle il se trouve par exemple entièrement au-dessous du plan 15 supérieur de la sellette 13, à une position finale d'inversion (celle de la FIG.4), dans laquelle il se trouve au-dessus du plan 15 supérieur de la sellette 12.

Le pousseur 16 présente une forme extérieure correspondant de préférence à la forme du diaphragme 7 après inversion. Mais le pousseur 16 pourrait avoir une forme moins élaborée, telle que, par exemple, celle d'une tige adaptée.

Le dispositif 1 comporte encore un organe 17 d'appui supérieur. Comme ceci sera expliqué plus en détail ultérieurement, cet organe 17 d'appui est destiné à venir en appui sur le récipient 2 bouché lorsque celui-ci est en place sur la sellette 13 et ainsi contrer la force du pousseur 16 lorsque ce dernier est déplacé vers la position d'inversion.

Dans l'exemple, l'organe 17 d'appui est constitué par une pièce en forme de cloche, qui vient coiffer les moyens 11 de bouchage (et donc le col 5 du récipient) et vient en appui sur une zone de l'épaule 4 légèrement sous le col 5. Au lieu d'être constitué par une cloche appuyant sur l'épaule, l'organe 17 d'appui pourrait être constitué par une pièce appuyant simplement sur les moyens 11 de bouchage. Toutefois, la cloche est plus avantageuse, en ce sens qu'elle génère moins de contraintes sur le récipient 2. En effet, un appui sur les moyens 11 de bouchage engendre des pressions à la jonction entre le col 5 et l'épaule 4, qui est une zone de faible section et pas du tout étirée, donc fragile, alors que la cloche appuie sur une section plus grande, de sorte que la pression d'appui est moindre (pour une force équivalente appliquée).

L'organe 17 d'appui s'appuie préférentiellement sur toute la circonférence de l'épaule. Il est toutefois à noter qu'il pourrait comporter une portion de sa paroi tronquée, de façon à permettre un dégagement de la bouteille lors des phases de chargement / déchargement sur la sellette 13, et limiter ainsi la course de déplacement du bloc 18 lorsque le dispositif 1 est porté sur un carrousel ou est mobile par rapport à une zone de chargement et/ou une zone de déchargement des récipients 2.

L'organe 17 d'appui est fixé à une extrémité, située en regard de la sellette 13 et du pousseur 16, d'un bloc 18 de liaison relié au châssis 12 par une liaison en translation permettant au bloc d'être déplacé verticalement par rapport à la sellette entre une position haute permettant la mise en place du récipient dans le dispositif et une position basse dans laquelle le bloc 18 est maintenu pendant l'inversion.

Comme visible sur les figures, notamment sur la FIG.1, le bloc 18 est fixé à l'extrémité d'un arbre 19 monté coulissant dans le sens vertical dans un fourreau 20 porté par le châssis 12. Ainsi, le bloc 18 peut être rapproché ou éloigné de la sellette 13.

L'arbre 19 et donc le bloc 18 sont reliés à un mécanisme qui permet un mouvement de monte et baisse de l'arbre 19 et du bloc 18 et un maintien ferme en position basse de l'arbre 19 et du bloc 18 pendant l'inversion et le contrôle. Les différentes figures illustrent le bloc 18 en position basse dans laquelle il est fermement maintenu pendant l'inversion.

Le mécanisme qui permet ledit mouvement de monte et baisse de l'équipage constitué par l'arbre 19 et le bloc 18 est par exemple un mécanisme à came et galet. Sur les figures, seul un galet 21 est représenté. Le mécanisme peut comprendre, au-dessus du galet 21 une première came, dite came haute et au-dessous une seconde came (encore appelée came basse ou contre came). Les deux cames servent à guider le galet 21 pour la montée ou la descente de l'équipage constitué par l'arbre 19 et le bloc 18, la came haute appuyant sur le galet et évitant la remontée de l'équipage constitué par l'arbre 19 et le bloc 18 lorsqu'une poussée est exercée du bas vers le haut sous l'organe 17 d'appui. Il serait encore envisageable d'avoir un mécanisme ne comportant qu'une came haute, un galet et un ressort de remontée exerçant une force antagoniste à celle de la came haute. Il serait envisageable encore d'avoir un mécanisme motorisé pour la montée ou la descente de l'équipage constitué par l'arbre 19 et le bloc 18, ce qui faciliterait la personnalisation du dispositif pour tenir compte des variations des hauteurs de récipients d'une phase de production à une autre.

Conformément à l'invention, l'organe 17 d'appui est fixé au bloc 18 par l'intermédiaire de moyens de liaison élastique en compression. Ceux-ci sont agencés pour que ledit organe soit lui-même mobile en translation par rapport au bloc 18 dans une direction perpendiculaire au plan de la sellette et pour que, en l'absence de récipient entre la sellette 13 et l'organe 17 d'appui, ce dernier soit dans une première position extrême, basse relativement au bloc 18, et pour que, lorsqu'une pression supérieure à la force minimale de rappel des moyens de liaison élastique en compression est exercée vers le haut contre cet organe 17, ce dernier remonte vers une seconde position extrême, haute, en s'éloignant de la sellette 13.

A cet effet, les moyens de liaison élastique en compression, visibles sur le médaillon de la FIG.1, sont agencés comme décrit ci-après.

Le bloc 18 est creusé, à son extrémité opposée à l'arbre 19, d'un logement 22 orienté selon l'axe X-X de l'installation 1, à savoir un axe qui passe au centre de l'orifice 14 central de la sellette 13, et qui est confondu avec celui de l'arbre 19, du pousseur 16, de l'organe 17 d'appui et du bloc 18 lui-même. Le logement s'ouvre donc en direction de l'organe 17 d'appui. L'organe d'appui 17 est fixé, à sa partie haute, par exemple par vissage, à une tige 23 qui se termine, à son extrémité opposée à l'organe 17 d'appui, par une couronne 24 annulaire formant une tête plate entourant cette extrémité.

La partie de la tige 23 située entre la couronne 24 et l'organe 17 d'appui est positionnée dans un fourreau 25 dans lequel elle peut coulisser librement. La longueur de cette partie de la tige 23 est donc supérieure à la longueur du fourreau 25 laissant la place libre pour positionner un ressort 26 travaillant en compression autour de la tige 23 entre l'organe d'appui et le fourreau 25. Si on considère l'orientation des figures, où l'organe 17 d'appui est disposé sous le fourreau 25, le ressort est donc positionné au-dessus de l'organe 17 d'appui et sous le fourreau 25. Ainsi, en l'absence de poussée du bas vers le haut (en considérant l'orientation de la FIG.1) contre l'organe 17 d'appui, comme visible sur le médaillon, le ressort 26 tend maintenir l'organe 17 d'appui en position écartée par rapport au fourreau 25 (en le poussant vers le bas, si on considère toujours l'orientation de la figure) et la couronne 24 se trouve alors en butée au-dessus du fourreau 25. Il est important de noter que les dimensions de la tige 23, du fourreau 25 et du ressort 26 sont telles qu'elles permettent un mouvement vers le haut de l'organe 17 d'appui lorsqu'une poussée est exercée sous celui-ci.

Le fourreau 25 est emmanché dans le logement 22, de sorte que la couronne 24 et donc l'extrémité supérieure de la tige 23 sont placées à l'intérieur du logement 22. En outre, le fourreau 25 et le logement 22 sont agencés pour que, lorsque le fourreau 25 est en place, subsiste un écartement entre l'extrémité supérieure de la tige 23 et la paroi 27 supérieure du logement 22, pour permettre à la tige 23 de coulisser librement dans le fourreau 25 lorsque l'organe 17 d'appui est sollicité du bas vers le haut.

Les dimensions de la tige 23, du fourreau 25 et du ressort 26 sont telles qu'en l'absence de sollicitation du bas vers le haut contre l'organe 17 d'appui, l'écartement entre le dessus de l'organe 17 d'appui et le bas du fourreau 25 permette un mouvement vers le haut de l'organe 17 d'appui sur une distance d maximum prédéterminée lorsqu'une poussée est exercée du bas vers le haut contre l'organe 17 d'appui.

Ainsi, en l'absence de sollicitation du bas vers le haut contre l'organe 17 d'appui, ce dernier est dans une première position extrême, basse relativement au bloc 18. Lorsqu'il est sollicité vers le haut, le mouvement de remontée stoppe lorsque l'organe 17 d'appui parvient au contact du fourreau 25, c'est-à-dire, en d'autres termes, lorsque l'organe 17 d'appui a parcouru la distance d maximum.

Dans ce cas, l'écartement entre l'extrémité supérieure de la tige 23 et la paroi 27 supérieure du logement 22 est tel qu'il est au moins égal à la distance d maximum pour permettre le déplacement de l'organe 17 d'appui relativement au bloc 18..

Dans une variante, c'est l'écartement entre l'extrémité supérieure de la tige 23 et la paroi 27 supérieure du logement 22 qui détermine la distance d maximum de la tige 23, la paroi 27 supérieure constituant alors une butée pour arrêter la tige. Dans ce cas, la valeur de l'écartement correspond à la distance d.

De préférence, comme illustré, sur les figures et plus particulièrement visible dans le médaillon de la FIG.1, des moyens, tels qu'un doigt 28 sont prévus pour empêcher toute rotation dans le bloc 18 de l'ensemble constitué par l'organe 17 d'appui et de la tige 23. A cet effet, le doigt 28 est fixé par exemple par vissage dans un filetage 29 ménagé dans la paroi 27 supérieure du logement 22 et le doigt 28 traverse un trou ménagé dans la couronne 24, ce qui prévient toute rotation, mais n'interdit pas un déplacement vertical de l'ensemble en question.

Pour donner un ordre de grandeur, la valeur de l'écartement entre le dessus de l'organe 17 d'appui et le bas du fourreau 25 ou, alternativement, la valeur de l'écartement entre l'extrémité supérieure de la tige 23 et la paroi 27 supérieure du logement 22 est telle que la distance d maximum que peut parcourir l'organe 17 d'appui est inférieure à 10 mm, par exemple comprise entre 3 mm et 8 mm. Dans une réalisation, pour des récipients 2 constitués par des bouteilles de 1 l, une course sur une distance d de 4 mm convient.

Des moyens de réglage, non illustrés sont prévus dans le dispositif pour que, lorsqu'un récipient 2 dont le diaphragme 7 doit être inversé est en place sur la sellette et que le bloc 18 parvient en position basse, l'organe 17 d'appui parvienne lui-même au contact du récipient 2, sans appuyer sur celui-ci, voire en soit légèrement écarté. Il faut en effet adapter le dispositif 1 en tenant compte des dimensions du récipient 2 à traiter, notamment de sa hauteur. Le réglage peut être effectué par exemple en modifiant la position du galet 21 sur l'arbre 19 et/ou en modifiant la position de la came (non illustrée) qui coopère avec le galet 21.

Dans la réalisation illustrée par la FIG.1, où l'organe 17 d'appui est en forme de cloche, après réglage et descente du bloc 18 en position basse, l'organe 17 d'appui vient au contact de l'épaule 4 du récipient 2, ou en est légèrement écarté. Toutefois, comme évoqué auparavant, il pourrait s'agir d'un agencement qui viendrait en appui sur les moyens de bouchage du récipient.

Toujours pour donner un ordre de grandeur, la force minimale de rappel des moyens de compression constitués par le ressort 26 est comprise entre 100 et 300 N ; dans une mise en œuvre, pour une bouteille de 1 l, elle est de 250 N. Cette force minimale est celle lorsque le ressort est distendu, à savoir lorsque le ressort est dans la position de la FIG.1. Toutefois, compte tenu de la faible distance d, on considérera par la suite que la force de rappel n'augmente pas significativement lorsque le ressort est comprimé au maximum de sorte que le terme "force de rappel" sera employé quelle que soit la position de l'organe 17 d'appui relativement au bloc 18.

Les moyens d'entrainement du pousseur 16 sont agencés pour que la force appliquée au pousseur puisse varier entre l'inversion et le contrôle. Ainsi, lors de l'inversion, la force (dite "force d'inversion") appliquée au pousseur 16 peut être comprise entre 400 N et 1000 N. Lors du contrôle, la force appliquée au pousseur 16 est inférieure à la force de rappel du ressort 26 et à la force nécessaire pour déplacer le diaphragme ; dans une mise en œuvre, la force appliquée au pousseur 16 lors du contrôle (dite "force de contrôle") est comprise entre 100 et 200 N ; dans une mise en œuvre, elle est de l'ordre de 150 N.

On comprendra plus loin pourquoi la force appliquée au pousseur 16 lors du contrôle doit être inférieure à la force du de rappel du ressort 26. Ainsi, si la force de rappel du ressort est de 200 N, alors, il faudra appliquer au pousseur 26 une force strictement inférieure à 200 N lors du contrôle.

Le fonctionnement du dispositif va maintenant être expliqué en détail.

Avant inversion, un récipient 2 préalablement rempli et bouché est placé sur la sellette 13, alors que l'organe 17 d'appui est remonté suffisamment haut pour ne pas interférer avec le bouchon 11. La remontée de l'organe 17 d'appui est effectuée en remontant l'équipage constitué par l'arbre 19 et le bloc 18 auquel il est lié mécaniquement par la tige 23 et le fourreau 25. L'organe 17 d'appui est redescendu pour venir au contact du récipient 2, ici au contact de l'épaule 4, sans appuyer dessus à ce stade. Si l'organe 17 d'appui est une cloche avec une portion de paroi tronquée, pour permettre le passage des moyens 11 de bouchage lors de la mise en place du récipient 2 sur la sellette 13, la remontée est moindre.

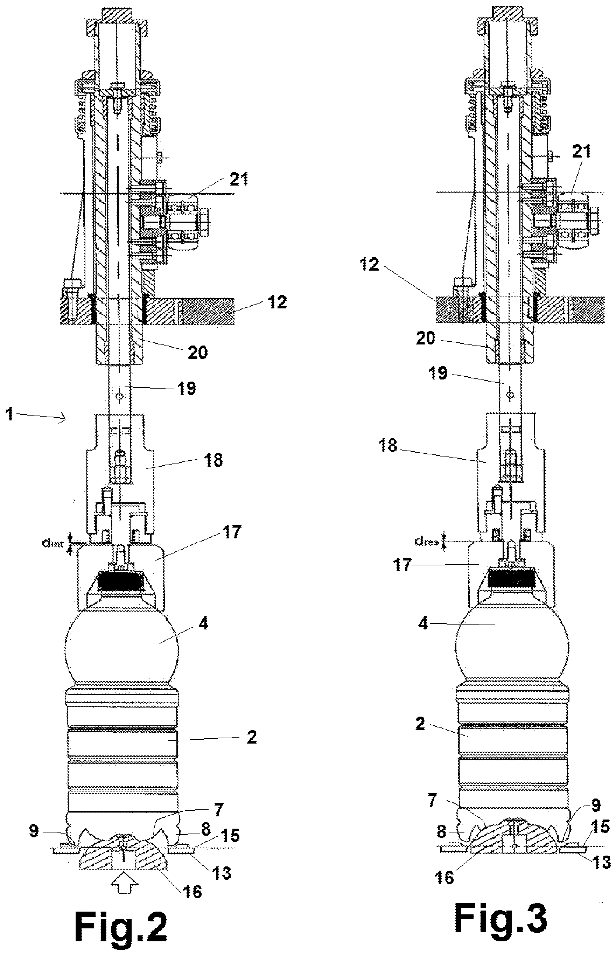

Puis, comme illustré sur la FIG.2, la remontée du pousseur 16 est amorcée, en y appliquant la force d'inversion. Du fait que le récipient 2 est rempli et fermé, il présente une certaine rigidité mécanique. Ceci ajouté au fait que la structure de l'installation est telle que la force d'inversion est supérieure à celle exercée par le ressort 26 sur l'organe 17 d'appui, la remontée du pousseur 16 provoque une remontée du récipient 2, dont l'assise 9 s'écarte de la sellette 13 en remontant au-dessus du plan 15 supérieur de cette dernière, et le récipient 2 vient lui-même pousser l'organe 17 d'appui vers le haut, jusqu'à ce que la distance d maximum ait été parcourue. Il en résulte que l'assise 9 s'écarte du plan 15 supérieur. Comme on le lira plus tard, lors de cette remontée de l'organe 17 d'appui, l'inversion du diaphragme 7 peut débuter et l'allongement du récipient 2 aussi, de sorte que lorsque l'organe 17 d'appui atteint sa position haute, l'assise 9 peut être écartée du plan 15 supérieur de la sellette d'une distance inférieure à la distance d.

La FIG.2 présente le dispositif 1 alors que l'organe 17 d'appui est en position intermédiaire entre sa position basse et sa position dans laquelle la distance d maximum a été parcourue. Il reste donc une portion dᵢₙₜ de la distance d à parcourir. On remarque sur cette FIG.2 que l'assise 9 est légèrement décollée du plan 15 supérieur de la sellette.

Puis, FIG.3, lorsque l'organe 17 d'appui a parcouru la distance d maximum, l'assise 9 se trouve éloignée du plan 15 supérieur de la sellette 13, à une distance de ce plan. La valeur de cette distance peut correspondre à celle de la distance d maximum ou être moindre dans la mesure où, lors de la montée initiale, l'inversion, qui est mentionnée ci-après, de même que l'allongement du récipient 2 ont pu commencer de sorte que lorsque l'organe 17 d'appui atteint sa position haute, l'assise 9 peut être écartée du plan 15 supérieur de la sellette d'une distance inférieure à la distance d. De la sorte, l'organe 17 d'appui est en contact contre le bloc 18 et la valeur résiduelle dᵣₑₛ de la distance est nulle. Ensuite, le pousseur 16 continue de monter pour inverser le diaphragme 7 (ou finir l'inversion si elle a commencé plus tôt lors de la remontée du pousseur 16). Il se produit alors le phénomène suivant, qui est la conséquence de l'invention. La déformation du diaphragme 7 vers l'intérieur du récipient 2 provoque une augmentation de sa pression interne qui est tout d'abord compensée par une compression et donc une réduction du volume d'air qui subsiste dans le col (l'espace de tête) du récipient, le liquide contenu dans le récipient 2 conservant son volume, du fait de son incompressibilité. Lorsque l'air est totalement comprimé, les forces engendrées par le pousseur 16 et l'organe d'appui 17 à l'intérieur du récipient 2 deviennent telles que le récipient 2 subit des contraintes internes qui tendent à repousser ses parois. Or, l'éloignement provoqué pendant la montée du pousseur 16 entre l'assise 9 et le plan 15 supérieur de la sellette 13 permet de libérer une zone de contraintes, et les forces engendrées qui tendent à repousser les parois provoquent une expansion longitudinale du récipient 2, de sorte que, à la fin de l'inversion, l'assise 9 s'est rapprochée du plan 15 supérieur de la sellette 13 alors que l'organe 17 d'appui est toujours en position haute, comme visible sur la FIG.4.

Des essais, réalisés avec des récipients de 1 l, ont mis en évidence qu'un déplacement sur une distance d de 4 mm permet qu'à la fin de l'inversion, l'assise 9 soit redescendue à une distance maximum du plan 15 supérieur de la sellette 13 de l'ordre de 2 mm, sans toutefois revenir au contact de ce plan. Ceci permet d'être quasiment certain que la pression interne résiduelle après inversion est moindre, comparativement aux procédés antérieurs, et d'éviter que, lors du retour du pousseur 16 vers sa position escamotée, le diaphragme 7 ne tende à s'affaisser, comme c'est le cas parfois dans l'art antérieur.

Après inversion, comme visible sur la FIG.5, le pousseur 16 est replacé dans sa position d'origine (qu'il occupait avant inversion) et l'assise 9 du récipient 2 avec sa membrane inversée est redescendue sur le plan 15 supérieur de la sellette 13. Il convient de noter que, lors de la redescente du pousseur 16, l'organe 17 d'appui accompagne le mouvement, de sorte que le récipient 2 est pris entre le pousseur 16 et l'organe 17 d'appui jusqu'à ce que l'assise 9 rejoigne le plan 15 supérieur de la sellette 13. En d'autres termes, le récipient est guidé lors de toute la phase de redescente. Par ailleurs, puisque le récipient 2 a subi une expansion longitudinale lors de l'inversion, lorsque l'assise 9 parvient sur la sellette 13, l'organe 17 d'appui exerce toujours une certaine pression sur le récipient 2 (plus précisément sur son épaule 4), car le ressort 26 est toujours plus ou moins comprimé. En fait, l'organe 17 d'appui ne retrouve pas sa position initiale à ce stade ; il se retrouve à une position intermédiaire, à une distance d'ᵢₙₜ comprise entre les distances d et dᵣₑₛ, c'est-à-dire les distances avant et après inversion. A titre d'exemple, dans le cas d'une distance d maximum de 4 mm, si le récipient s'est allongé de 2 mm, l'organe 17 d'appui est 2 mm plus haut que dans sa position d'origine (celle de la FIG.1).

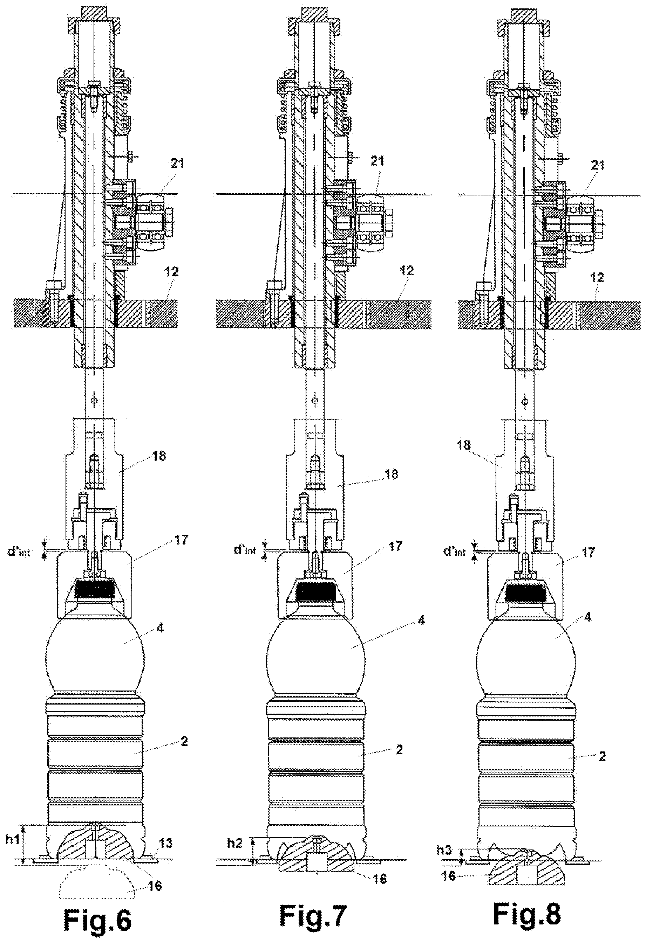

Le dispositif 1, tel qu'il est conçu, permet en outre de contrôler qu'à l'issue de l'inversion, le diaphragme 7 reste dans sa position inversée (celle de la FIG.5) et n'est pas revenu partiellement ou totalement vers sa position d'origine. La vérification est illustrée par les FIG.6 à 8.

A l'issue de l'inversion, comme décrit ci-avant, le pousseur 16 est redescendu à sa position initiale et l'organe 17 d'appui est partiellement redescendu, à une distance d'ᵢₙₜ du bloc 18, de sorte qu'il n'est pas en butée haute contre ce dernier. Le contrôle est alors réalisé en faisant remonter le pousseur 16, tout en lui appliquant la force de contrôle mentionnée auparavant, qui est inférieure à la force de rappel du ressort 26 et qui est telle qu'elle ne permettrait pas de contrer la rigidité du récipient et de repousser vers le haut un diaphragme qui aurait été mal inversé ; de préférence, la force de contrôle appliquée au pousseur 16 est comprise entre 100 et 200 N ; dans une mise en œuvre, elle est de l'ordre de 150 N.

Lorsque le pousseur 16 arrive en butée haute contre le diaphragme 7, il s'arrête automatiquement puisque les contraintes qu'il subit alors (force de rappel du ressort et rigidité du récipient) sont supérieures ; la valeur de la course de déplacement du pousseur 16 jusqu'à son arrêt est alors déterminée. Selon que la valeur est acceptable ou pas, le diaphragme est considéré comme correctement inversé ou pas.

A titre d'exemple, si l'inversion d'un diaphragme nécessite, lors des phases illustrées par les FIG. 1 à 4, un déplacement nominal vertical du pousseur 16 de 35 mm par rapport à sa position d'origine, il pourra être décrété que le diaphragme est correctement inversé si l'arrêt du pousseur 16 lors de la phase de contrôle survient à 35 mm, c'est-à-dire si aucune redescente du diaphragme, aussi minimale soit-elle, n'est survenue. Dans un tel cas, il pourra être décrété que le diaphragme 7 est incorrectement inversé si l'arrêt lors de la phase de contrôle survient strictement avant que le déplacement nominal soit atteint.

En variante, il pourra être décrété que le diaphragme est correctement formé alors qu'une variation de quelques pour-cent par rapport au déplacement nominal est survenue (le diaphragme est par exemple redescendu de 2 mm, ce qui correspond à un arrêt à 33 mm lors du contrôle dans l'exemple considéré). Dans un tel cas, il pourra être décrété que le diaphragme 7 est incorrectement inversé si la variation excède le pourcentage admissible (arrêt avant que le pousseur 16 ait parcouru les 33 mm dans cet exemple).

La FIG.6 illustre le cas d'un diaphragme 7 correctement inversé, le pousseur 16 étant totalement remonté par rapport à sa position d'origine, illustrée en traits interrompus sur cette figure, d'une hauteur h1.

La FIG.7 illustre le cas d'un diaphragme 7 incorrectement inversé, le pousseur 16 étant seulement remonté par rapport à sa position d'origine, d'une hauteur h2, très inférieure à h1 (h2<h1).

La FIG.8, enfin, illustre le cas d'un diaphragme 7 absolument pas inversé, le pousseur 16 étant seulement remonté de quelques mm, la valeur h3 de la hauteur de remontée étant encore plus faible, puisque c'est celle qu'il fallait, partant de la FIG1, pour atteindre le diaphragme avant de commencer la poussée du récipient vers le haut, puis l'inversion.

## Revendications

1. Procédé d'inversion du diaphragme (7) d'un récipient (2) rempli et bouché comportant un corps (3) prolongé, au-dessus, par une épaule (4) surmontée par un col (5), et comportant, dans le prolongement du corps (3), vers le bas, un fond (6) comprenant le diaphragme (7) contenu dans un anneau (8) se terminant par une assise (9) périphérique formant un plan de pose, procédé selon lequel le récipient (2) est préalablement posé sur une sellette (13) d'un dispositif (1) d'inversion, un organe (17) d'appui est appliqué sur le récipient (2) et un pousseur (16) est remonté au travers de la sellette (13) pour inverser le diaphragme (7) et le conformer en voute, **caractérisé en ce que** pendant que le pousseur (16) inverse le diaphragme (7), l'assise (9) est éloignée du plan (15) supérieur de la sellette (13), de façon à ce que, lorsque le pousseur (16) atteint sa position haute, une zone soit libérée entre l'assise (9) et la sellette (13) pour permettre une expansion longitudinale du récipient sous l'effet combiné de l'augmentation de la pression interne provoquée par la diminution du volume due à l'inversion et des forces engendrées à l'intérieur du récipient (2) par le pousseur (16) et l'organe (17) d'appui.

2. Procédé selon la revendication 1, **caractérisé en ce qu'**il comporte, après réalisation de l'inversion du diaphragme (7) alors que le récipient (2) est positionné avec son assise (9) sur la sellette (13) et que l'organe (17) d'appui est maintenu en appui sur le récipient, une séquence de contrôle de l'inversion d'un diaphragme, qui comporte les étapes suivantes
- le déplacement du pousseur (16) de sa position escamotée vers sa position finale, d'inversion du diaphragme, en lui appliquant une force prédéterminée d'entrainement, inférieure à une force qui permettrait de repousser vers le haut un diaphragme qui aurait été mal inversé, de sorte que le pousseur (16) pénètre dans la voute constituée par le diaphragme et que, lorsque le pousseur parvient au contact de cette voute, le récipient reste plaqué sur la sellette et le mouvement du pousseur est stoppé du fait du différentiel des forces ;
- la détermination de la position du pousseur au moment où il est stoppé et, en conséquence, la détermination de l'amplitude du déplacement qu'il a effectué ;
- la comparaison de l'amplitude du déplacement avec une valeur théorique qui, si elle est atteinte (h1), correspond à un diaphragme correctement inversé et donc une voute correctement formée et qui, si elle n'est pas atteinte, correspond à une voute incorrectement formée (h2<h1), voire pas formée du tout (h3) avec h3<h2<h1.

3. Dispositif (1) pour la mise en œuvre du procédé selon l'une des revendications 1 ou 2, **caractérisé en ce qu'**il est porté par un châssis (12), et comporte :
- une sellette (13) inférieure de support, fixe par rapport audit châssis (12), laquelle sellette est traversée par un orifice (14) central et comporte un plan (15) de réception entourant ledit orifice (14) pour recevoir l'assise (9) d'un récipient ;
- un pousseur (16), déplaçable au travers de l'orifice (14) central de la sellette (13) selon une direction verticale par des moyens d'entraînement solidaires du châssis, le pousseur (16) pouvant être déplacé d'une position escamotée à une position finale d'inversion, dans laquelle il se trouve au-dessus du plan de la sellette ;
- un organe (17) d'appui supérieur, destiné à venir en appui sur le récipient (2) bouché lorsque celui-ci est en place et contrer la force du pousseur (16) lorsque ce dernier est déplacé vers la position d'inversion, lequel organe (17) est fixé à une extrémité, située en regard de la sellette (13) et du pousseur (16), d'un bloc (18) de liaison relié au châssis (12) par une liaison en translation permettant au bloc (18) d'être déplacé verticalement par rapport à la sellette entre une position haute, permettant la mise en place du récipient dans le dispositif, et une position basse, dans laquelle le bloc (18) est maintenu pendant l'inversion ;
et **en ce que** l'organe (17) d'appui est fixé à ladite extrémité du bloc (18) par l'intermédiaire de moyens (24, 25, 26) de liaison élastique en compression, qui sont agencés pour que ledit organe (17) soit lui-même mobile en translation par rapport au bloc (18) dans une direction perpendiculaire au plan (15) de la sellette (13) et pour que, en l'absence de récipient (2) entre la sellette (13) et l'organe (17) d'appui, ce dernier soit dans une première position extrême, basse relativement au bloc (18), et pour que, lorsqu'une pression supérieure à la force minimale de rappel des moyens (24, 25, 26) de liaison élastique en compression est exercée vers le haut contre cet organe, il remonte vers une seconde position extrême, haute, en s'éloignant de la sellette (13),

4. Dispositif (1) selon la revendication 3, **caractérisé en ce que** la distance entre l'organe (17) d'appui et la sellette, est telle que, lorsqu'un récipient dont le diaphragme (7) doit être inversé est en place sur la sellette (13) et que le bloc parvient en position basse, l'organe (17) d'appui parvient au contact du récipient.

5. Dispositif (1) selon l'une des revendications 3 ou 4, **caractérisé en ce que** la force d'entraînement du pousseur (16) est sélectionnable entre une valeur prédéterminée, supérieure à la force maximale de rappel des moyens (24, 25, 26) de liaison élastique en compression, et une valeur inférieure à la force minimale de rappel desdits moyens.

6. Dispositif (1) selon l'une des revendications 3 à 5, **caractérisé en ce que** l'organe (17) d'appui est agencé pour venir en appui sur les moyens (11) de bouchage du récipient (2).

7. Dispositif (1) selon l'une des revendications 3 à 5, **caractérisé en ce que** l'organe (17) d'appui est sous la forme d'une cloche dont les dimensions sont telles qu'elle peut contenir les moyens (11) de bouchage du récipient et dont le rebord périphérique est agencé pour venir en appui sur une zone supérieure du récipient (1), telle son épaule (4).

8. Dispositif (1) selon l'une des revendications 3 à 5, **caractérisé en ce que** les moyens de liaison élastique en compression par l'intermédiaire desquels l'organe d'appui est fixé à ladite extrémité du bloc comportent un ressort en compression.

9. Dispositif (1) selon la revendication 8, **caractérisé en ce que** le ressort est métallique.

10. Dispositif (1) selon la revendication 8, **caractérisé en ce que** le ressort est en élastomère.

11. Dispositif (1) selon l'une des revendications 3 à 10, **caractérisé en ce que** l'organe (17) d'appui présente une course de déplacement, entre ses positions haute et basse inférieure ou égale à 10 mm.

12. Dispositif (1) selon la revendication 11, **caractérisé en ce que** la course de déplacement est inférieure à 5 mm.

13. Dispositif (1) selon l'une des revendications 3 à 12, **caractérisé en ce que** le pousseur (16) présente une forme extérieure correspondant sensiblement à la forme du diaphragme (7) après inversion.

14. Utilisation du dispositif (1) selon l'une des revendications 3 à 13, pour la mise en œuvre du procédé d'inversion d'un diaphragme (7) selon la revendication 1, **caractérisée en ce qu'**elle comporte successivement les étapes suivantes :
- le positionnement du récipient (2) avec son assise (9) sur la sellette (13) alors que le pousseur (16) est en position escamotée et le bloc (18) est en position haute ;
- l'amenée du bloc (18) à sa position basse, de sorte que l'organe (17) d'appui parvient au contact du récipient (2) ;
- le déplacement du pousseur (16) de sa position escamotée vers sa position finale, d'inversion du diaphragme, en lui appliquant une force prédéterminée d'entrainement, supérieure à la force maximale de rappel des moyens de liaison élastique en compression, de sorte que pendant le déplacement du pousseur, la force appliquée sous le récipient (2) provoque :
- sa montée, de sorte que l'assise (9) s'éloigne de la sellette (13), et la compression concomitante des moyens élastiques de sorte que l'organe (17) d'appui est déplacé vers sa position haute sous l'effet de la poussée exercée par la remontée du récipient ;
- l'entrainement du diaphragme (7) vers sa position inversée, ce qui provoque une réduction du volume interne du récipient et une augmentation de sa pression interne avec, pour conséquence, une expansion longitudinale du récipient sous l'effet de la pression interne, et un rapprochement concomitant de l'assise (9) et de la sellette (13).

15. Utilisation selon la revendication 14, **caractérisé en ce qu'**elle comporte une étape de retour du pousseur (16) vers sa position escamotée et, en conséquence, la redescente du récipient (2) sur la sellette (13) avec un maintien de l'appui sur le récipient sous l'action des moyens de liaison élastique en compression.

## Patentansprüche

1. Verfahren zur Umkehrung der Membran (7) eines gefüllten und verschlossenen Behälters (2), der einen Körper (3) aufweist, der oben durch einen von einem Hals (5) überragten Ansatz (4) verlängert ist, und der in der Verlängerung des Körpers (3) nach unten einen Boden (6) aufweist, der die Membran (7) umfasst, die in einem Ring (8) enthalten ist, der in einer umlaufenden Auflagefläche (9) endet, die eine Abstellebene bildet, wobei gemäß diesem Verfahren der Behälter (2) zuvor auf einen Sattel (13) einer Umkehrvorrichtung (1) gestellt wird, ein Stützorgan (17) auf dem Behälter (2) angebracht wird und ein Schieber (16) durch den Sattel (13) hindurch nach oben bewegt wird, um die Membran (7) umzukehren und sie zu einem Gewölbe zu formen, **dadurch gekennzeichnet, dass**, während der Schieber (16) die Membran (7) umkehrt, die Auflagefläche (9) von der oberen Ebene (15) des Sattels (13) entfernt wird, so dass, wenn der Schieber (16) seine obere Position erreicht, ein Bereich zwischen der Auflagefläche (9) und dem Sattel (13) freigelegt wird, um eine Längsausdehnung des Behälters unter der kombinierten Wirkung der Erhöhung des Innendrucks, die durch die auf die Umkehrung zurückzuführende Verkleinerung des Volumens hervorgerufen wird, und der durch den Schieber (16) und das Stützorgan (17) im Inneren des Behälters (2) erzeugten Kräfte zu ermöglichen.

2. Verfahren nach Anspruch 1, **dadurch gekennzeichnet, dass** es nach Durchführung der Umkehrung der Membran (7), während der Behälter (2) mit seiner Auflagefläche (9) auf dem Sattel (13) positioniert ist und das Stützorgan (17) in Anlage auf dem Behälter gehalten wird, einen Arbeitsablauf zur Kontrolle der Umkehrung einer Membran umfasst, welcher die folgenden Schritte umfasst:
- die Verlagerung des Schiebers (16) aus seiner versenkten Position in seine Endposition der Umkehrung der Membran, indem auf ihn eine vorbestimmte Antriebskraft ausgeübt wird, die kleiner als eine Kraft ist, die es ermöglichen würde, eine Membran, welche schlecht umgekehrt worden ist, nach oben zurückzudrücken, so dass der Schieber (16) in das von der Membran gebildete Gewölbe eindringt und dass, wenn der Schieber mit diesem Gewölbe in Kontakt kommt, der Behälter an den Sattel angedrückt bleibt und die Bewegung des Schiebers infolge des Unterschieds der Kräfte gestoppt wird;
- die Bestimmung der Position des Schiebers zu dem Zeitpunkt, zu dem er gestoppt wird, und demzufolge die Bestimmung der Amplitude der Verlagerung, die er ausgeführt hat;
- den Vergleich der Amplitude der Verlagerung mit einem theoretischen Wert, welcher, falls er erreicht wird (h1), einer korrekt umgekehrten Membran und somit einem korrekt ausgebildeten Gewölbe entspricht und welcher, falls er nicht erreicht wird, einem nicht korrekt ausgebildeten (h2 < h1) oder sogar überhaupt nicht (h3) ausgebildeten Gewölbe, mit h3 < h2 <h1, entspricht.

3. Vorrichtung (1) zur Durchführung des Verfahrens nach einem der Ansprüche 1 oder 2, **dadurch gekennzeichnet, dass** sie von einem Gestell (12) getragen wird und aufweist:
- einen unteren Tragsattel (13), der in Bezug auf das Gestell (12) feststehend ist, wobei dieser Sattel von einer mittleren Öffnung (14) durchquert wird und eine Aufnahmeebene (15), welche die Öffnung (14) umgibt, zum Aufnehmen der Auflagefläche (9) eines Behälters aufweist;
- einen Schieber (16), der durch mit dem Gestell fest verbundene Antriebsmittel durch die mittlere Öffnung (14) des Sattels (13) hindurch in einer vertikalen Richtung verlagerbar ist, wobei der Schieber (16) aus einer versenkten Position in eine Endposition der Umkehrung, in welcher er sich oberhalb der Ebene des Sattels befindet, verlagert werden kann;
- ein oberes Stützorgan (17), das dazu bestimmt ist, auf dem verschlossenen Behälter (2) zur Anlage zu kommen, wenn dieser an seinem Platz ist, und der Kraft des Schiebers (16) entgegenzuwirken, wenn dieser Letztere zur Umkehrungsposition hin verlagert wird, wobei das Organ (17) an einem gegenüber dem Sattel (13) und dem Schieber (16) befindlichen Ende eines Verbindungsblocks (18) befestigt ist, der mit dem Gestell (12) durch eine Translationsverbindung verbunden ist, die es ermöglicht, dass der Block (18) in Bezug auf den Sattel vertikal zwischen einer hohen Position, welche die Anbringung des Behälters in der Vorrichtung ermöglicht, und einer niedrigen Position, in welcher der Block (18) während der Umkehrung gehalten wird, verlagert wird;
und dadurch, dass das Stützorgan (17) an dem Ende des Blocks (18) durch Mittel (24, 25, 26) zur druckelastischen Verbindung befestigt ist, welche dafür ausgelegt sind, dass das Organ (17) selbst in Bezug auf den Block (18) in einer zur Ebene (15) des Sattels (13) senkrechten Richtung translatorisch beweglich ist, und dass bei Nichtvorhandensein eines Behälters (2) zwischen dem Sattel (13) und dem Stützorgan (17) dieses Letztere sich in einer ersten, relativ zum Block (18) niedrigen äußersten Position befindet, und dass, wenn ein Druck, der größer als die minimale Rückstellkraft der Mittel (24, 25, 26) zur druckelastischen Verbindung ist, auf dieses Organ nach oben ausgeübt wird, es sich in eine zweite, hohe äußerste Position hinaufbewegt, wobei es sich vom Sattel (13) entfernt.

4. Vorrichtung (1) nach Anspruch 3, **dadurch gekennzeichnet, dass** der Abstand zwischen dem Stützorgan (17) und dem Sattel so groß ist, dass, wenn ein Behälter, dessen Membran (7) umgekehrt werden soll, auf dem Sattel (13) angebracht ist und der Block in die niedrige Position gelangt, das Stützorgan (17) mit dem Behälter in Kontakt kommt.

5. Vorrichtung (1) nach einem der Ansprüche 3 oder 4, **dadurch gekennzeichnet, dass** die Antriebskraft des Schiebers (16) zwischen einem vorbestimmten Wert, der größer als die maximale Rückstellkraft der Mittel (24, 25, 26) zur druckelastischen Verbindung ist, und einem Wert, der kleiner als die minimale Rückstellkraft dieser Mittel ist, wählbar ist.

6. Vorrichtung (1) nach einem der Ansprüche 3 bis 5, **dadurch gekennzeichnet, dass** das Stützorgan (17) dafür ausgelegt ist, an den Mitteln (11) zum Verschließen des Behälters (2) zur Anlage zu kommen.

7. Vorrichtung (1) nach einem der Ansprüche 3 bis 5, **dadurch gekennzeichnet, dass** das Stützorgan (17) in der Form einer Glocke vorliegt, deren Abmessungen so bemessen sind, dass sie die Mittel (11) zum Verschließen des Behälters enthalten kann, und deren Umfangsrand dafür ausgelegt ist, an einem oberen Bereich des Behälters (1), wie etwa seinem Ansatz (4), zur Anlage zu kommen.

8. Vorrichtung (1) nach einem der Ansprüche 3 bis 5, **dadurch gekennzeichnet, dass** die Mittel zur druckelastischen Verbindung, durch welche das Stützorgan an dem Ende des Blocks befestigt ist, eine Druckfeder aufweisen.

9. Vorrichtung (1) nach Anspruch 8, **dadurch gekennzeichnet, dass** die Feder eine Metallfeder ist.

10. Vorrichtung (1) nach Anspruch 8, **dadurch gekennzeichnet, dass** die Feder aus Elastomer besteht.

11. Vorrichtung (1) nach einem der Ansprüche 3 bis 10, **dadurch gekennzeichnet, dass** das Stützorgan (17) einen Verlagerungsweg zwischen seiner hohen und seiner niedrige Position aufweist, der kleiner oder gleich 10 mm ist.

12. Vorrichtung (1) nach Anspruch 11, **dadurch gekennzeichnet, dass** der Verlagerungsweg kleiner als 5 mm ist.

13. Vorrichtung (1) nach einem der Ansprüche 3 bis 12, **dadurch gekennzeichnet, dass** der Schieber (16) eine äußere Form aufweist, die im Wesentlichen der Form der Membran (7) nach der Umkehrung entspricht.

14. Verwendung der Vorrichtung (1) nach einem der Ansprüche 3 bis 13 zur Durchführung des Verfahrens zur Umkehrung einer Membran (7) nach Anspruch 1, **dadurch gekennzeichnet, dass** sie nacheinander die folgenden Schritte umfasst:
- die Positionierung des Behälters (2) mit seiner Auflagefläche (9) auf dem Sattel (13), während sich der Schieber (16) in der versenkten Position befindet und sich der Block (18) in der hohen Position befindet;
- die Verstellung des Blocks (18) in seine niedrige Position, so dass das Stützorgan (17) mit dem Behälter (2) in Kontakt kommt;
- die Verlagerung des Schiebers (16) aus seiner versenkten Position in seine Endposition der Umkehrung der Membran, indem auf ihn eine vorbestimmte Antriebskraft ausgeübt wird, die größer als die maximale Rückstellkraft der Mittel zur druckelastischen Verbindung ist, so dass während der Verlagerung des Schiebers die unter dem Behälter (2) ausgeübte Kraft hervorruft:
- seine Bewegung nach oben, so dass sich die Auflagefläche (9) von dem Sattel (13) entfernt, und das gleichzeitige Zusammendrücken der elastischen Mittel, so dass das Stützorgan (17) unter der Wirkung des durch die Aufwärtsbewegung des Behälters ausgeübten Schubes in seine hohe Position verlagert wird;
- die Mitnahme der Membran (7) in ihre umgekehrte Position, was eine Verkleinerung des Innenvolumens des Behälters und eine Erhöhung seines Innendrucks hervorruft, mit einer infolgedessen erfolgenden Längsausdehnung des Behälters unter der Wirkung des Innendrucks und einer gleichzeitigen Annäherung der Auflagefläche (9) und des Sattels (13).

15. Verwendung nach Anspruch 14, **dadurch gekennzeichnet, dass** sie einen Schritt der Rückkehr des Schiebers (16) in seine versenkte Position und demzufolge das Wiederabsenken des Behälters (2) auf den Sattel (13) umfasst, mit einer Aufrechterhaltung der Anlage auf dem Behälter unter der Wirkung der Mittel zur druckelastischen Verbindung.

## Claims

1. Method for inverting the diaphragm (7) of a filled and plugged container (2) comprising a body (3) prolonged, on the top, by a shoulder (4) topped by a neck (5) and comprising, in the extension of the body (3), downwards, a base (6) comprising the diaphragm (7) contained in a ring (8) terminated by a peripheral seat (9) forming a support plane, a method according to which the container (2) is previously placed on a saddle (13) of an inverting device (1), a bearing member (17) is applied to the container (2) and a pusher (16) is raised through the saddle (13) to invert the diaphragm (7) and shape it as a vault, **characterized in that**, while the pusher (16) inverts the diaphragm (7), the seat (9) is moved away from the top plane (15) of the saddle (13), so that, when the pusher (16) reaches its high position, a zone is freed up between the seat (9) and the saddle (13) to allow a longitudinal expansion of the container under the combined effect of the increase of internal pressure provoked by the reduction of the volume due to the inversion and of the forces generated inside the container (2) by the pusher (16) and the bearing member (17).

2. Method according to Claim 1, **characterized in that** it comprises, after the realisation of the inversion of the diaphragm (7) while the container (2) is positioned with its seat (9) on the saddle (13) and the bearing member (17) is kept bearing on the container, a diaphragm inversion control sequence, which comprises the following steps
- the displacement of the pusher (16) from its retracted position to its final position, of inversion of the diaphragm, by applying predetermined driving force, less than a force which would allow a diaphragm which had been badly inverted to be pushed back upwards, such that the pusher (16) penetrates into the vault composed of the diaphragm and that, when the pusher reaches contact with this vault, the container remains pressed on the saddle and the movement of the pusher is stopped because of the difference of the forces;
- the determination of the position of the pusher at the moment when it is stopped and, consequently, the determination of the amplitude of the displacement that it has performed;
- the comparison of the amplitude of the displacement with a theoretical value which, if it is reached (h1) corresponds to a diaphragm that is correctly inverted and therefore a vault that is correctly formed and which, if it is not reached, corresponds to a vault that is incorrectly formed (h2 < h1), even not formed at all (h3) with h3 < h2 < h1.

3. Device (1) for implementing the method according to one of Claims 1 and 2, **characterized in that** it is borne by a frame (12), and comprises:
- a supporting bottom saddle (13), fixed with respect to said frame (12), which saddle is passed through by a central orifice (14) and comprises a reception plane (15) surrounding said orifice (14) for receiving the seat (9) of a container;
- a pusher (16), that can be displaced through the central orifice (14) of the saddle (13) in a vertical direction by driving means secured to the frame, the pusher (16) being able to be displaced from a retracted position to a final position of inversion, in which it is above the plane of the saddle;
- a top bearing member (17), intended to come to bear on the plugged container (2) when the latter is in place and counter the force of the pusher (16) when the latter is displaced to the position of inversion, which member (17) is fixed to an end, situated facing the saddle (13) and the pusher (16), of a link block (18) linked to the frame (12) by a translational link allowing the block (18) to be displaced vertically with respect to the saddle between a high position, allowing the container to be placed in the device, and a low position, in which the block (18) is held during the inversion;
and **in that** the bearing member (17) is fixed to said end of the block (18) via compressively elastic link means (24, 25, 26), which are arranged so that said member (17) is itself movable in translation with respect to the block (18) in a direction at right angles to the plane (15) of the saddle (13) and so that, in the absence of a container (2) between the saddle (13) and the bearing member (17), the latter is in an first extreme position, low relative to the block (18), and so that, when a pressure greater than the minimum return force of the compressively elastic link means (24, 25, 26) is exerted upwards against this member, it rises up to an second extreme position, high, by moving away from the saddle (13).

4. Device (1) according to Claim 3, **characterized in that** the distance between the bearing member (17) and the saddle is such that, when a container whose diaphragm (7) has to be inverted is in place on the saddle (13) and that the block arrives in the low position, the bearing member (17) comes into contact with the container.

5. Device (1) according to one of Claims 3 and 4, **characterized in that** the driving force of the pusher (16) can be selected between a predetermined value, greater than the maximum return force of the compressively elastic link means (24, 25, 26), and a value less than the minimum return force of said means.

6. Device (1) according to one of Claims 3 to 5, **characterized in that** the bearing member (17) is arranged to come to bear on the plugging means (11) of the container (2).

7. Device (1) according to one of Claims 3 to 5, **characterized in that** the bearing member (17) is in the form of a bell whose dimensions are such that it can contain the plugging means (11) of the container and whose peripheral rim is arranged to come to bear on an upper zone of the container (1), such as its shoulder (4).

8. Device (1) according to one of Claims 3 to 5, **characterized in that** the compressively elastic link means via which the bearing member is fixed to said end of the block comprise a compression spring.

9. Device (1) according to Claim 8, **characterized in that** the spring is made of metal.

10. Device (1) according to Claim 8, **characterized in that** the spring is made of elastomer.

11. Device (1) according to one of Claims 3 to 10, **characterized in that** bearing member (17) has a displacement travel, between its high and low positions, less than or equal to 10 mm.

12. Device (1) according to Claim 11, **characterized in that** the displacement travel is less than 5 mm.

13. Device (1) according to one of Claims 3 to 12, **characterized in that** the pusher (16) has an outer form corresponding substantially to the form of the diaphragm (7) after inversion.

14. Use of the device (1) according to one of Claims 3 to 13, for the implementation of the method for inverting a diaphragm (7) according to Claim 1, **characterized in that** it comprises, in succession, the following steps:
- positioning the container (2) with its seat (9) on the saddle (13) while the pusher (16) is in retracted position and the block (18) is in high position;
- bringing the block (18) to its low position, such that the bearing member (17) comes into contact with the container (2);
- displacing the pusher (16) from its retracted position to its final position, of inversion of the diaphragm, by applying to it a predetermined driving force, greater than the maximum return force of the compressively elastic link means, such that, during the displacement of the pusher, the force applied under the container (2) causes:
- its rise, such that the seat (9) moves away from the saddle (13), and the concomitant compression of the elastic means such that the bearing member (17) is displaced to its high position under the effect of the thrust exerted by the rise of the container;
- the diaphragm (7) to be driven to its inverted position, which provokes a reduction of the internal volume of the container and an increase of its internal pressure with, consequently, a longitudinal expansion of the container under the effect of the internal pressure, and a concomitant convergence of the seat (9) and of the saddle (13).

15. Use according to Claim 14, **characterized in that** it comprises a step of return of the pusher (16) to its retracted position and, consequently, the lowering back of the container (2) onto the saddle (13) with the bearing on the container maintained under the action of the compressively elastic link means.
